# DEMANDE DE BREVET EUROPEEN

(11) **EP 1 003 171 A1**
(43) Date de publication de la demande: **24.05.2000**
(21) Numéro de dépôt: 99870237.7
(22) Date de dépôt: 17.11.1999
(51) Int. Cl.: G11B 23/03, G11B 17/04

(54) **Boîtiers pour support de données**

(30) Priorité: 18.11.1998 BE 9800833
(71) Demandeur: STAAR SOCIETE ANONYME, B-1200 Bruxelles (BE)
(72) Inventeur: d'Alayer de Costemore d'Arc, Stéphanie Marie A., 1474 Ways (BE)
(74) Mandataire: Overath, Philippe

(57) **Abrégé**

Le dispositif (1) protégeant des disques (4) possède une forme substantiellement circulaire et est composé d'un couvercle (2) et d'un fond (3) qui dans le mode de réalisation préféré effectuent un mouvement angulaire relatif limité. Il comprend un volet (10) interne au dispositif (1) et pivotant autour d'un axe (12) situé au-delà de l'axe dudit boîtier. Le couvercle (2) comporte un évidement (20), le fond (3) une ouverture (30) agissant sur la patte (14) du volet (10) pour le déplacer entre les deux positions où il découvre, respectivement obture l'ouverture (8) donnant accès au disque (4).

Le couvercle (2) est d'un diamètre supérieur a celui du fond (3) pour procurer une discontinuité protégeant la patte (14) en la rendant inaccessible de l'extérieur et/ou inciter l'utilisateur à orienter correctement le dispositif (1) en vue de son insertion dans un appareil de lecture et/ou enregistrement approprié.

## Description

La présente invention se rapporte aux boîtiers, enveloppes, logements, ... ci-après repris sous le seul terme boîtier pour des supports de données et plus particulièrement des supports en forme de disque. Ces boîtiers servent à protéger les surfaces des disques et comportent un volet mobile ou une trappe permettant aux moyens de lecture et/ou d'enregistrement d'accéder auxdites surfaces.

Les boîtiers présents sur le marché sont tous de forme parallélépipédique, semblables à ceux décrits dans les demandes de brevet européen EP 0 260 876, EP 0 768 662 et EP 0 794 532 et généralement munis de nervures, ce qui en augmente l'épaisseur, pour accroître leur rigidité car actuellement les disques sont fins (± 1,3 mm. ) et d'une taille assez importante (diamètre de 8 à 17 cm.) En outre, leurs volets mobiles sont montés en translation à l'extérieur des boîtiers ce qui a pour inconvénient que l'utilisateur peut facilement les manipuler, donc accéder au disque et endommager sa ou ses surfaces. Ces boîtiers possèdent également une discontinuité pour inciter l'utilisateur à les introduire avec la bonne orientation dans les appareils de lecture et/ou d'enregistrement, mais ces discontinuités ne sont pas toujours efficaces et bien souvent ces appareils doivent comporter des moyens spécifiques pour vérifier l'insertion correcte d'un boîtier par l'utilisateur avant d'autoriser tout autre mouvement.

D'autre part, l'emploi presque systématique d'un boîtier parallélépipédique pour protéger des disques génère une perte de place importante, environ 25% du volume, ce qui est contradictoire avec la tendance actuelle de l'industrie de produire des appareils très compacts.

On a proposé dans un autre domaine, à savoir celui du film cinématographique, un boîtier en partie circulaire comme décrit dans le brevet US 3.554.462 mais étant prévu pour stocker une bobine de film, c'est la bobine qui protège en partie le film et l'ouverture donnant accès au film est positionnée latéralement dans une excroissance parallélépipédique.

Le but de la présente invention est donc de remédier à ces divers inconvénients en proposant un boîtier pour support en forme de disque qui soit simple, compact et rigide.

Un autre but de l'invention est de proposer un boîtier particulièrement bien adapté à un disque et lui offrant un haut degré de protection.

Un autre but de l'invention est de proposer un boîtier dont la forme même incite l'utilisateur à le présenter correctement dans un appareil de lecture et/ou d'enregistrement approprié.

En vue de la réalisation de ces buts, le boîtier objet de l'invention est essentiellement caractérisé par le contenu de la revendication principale.

D'autres particularités, caractéristiques ressortiront de la description de deux variantes de réalisation préférées donnée ci-après, auxquelles diverses améliorations, modifications peuvent être apportées sans pour autant sortir du cadre de l'invention et pour laquelle:
- la figure 1 est une vue de dessus d'une première variante du dispositif de l'invention,
- la figure 2 est une coupe du dispositif de la figure 1 selon l'axe 2-2,
- la figure 3 est une vue de dessus du fond du dispositif de la figure 1, sans disque mais en position opérative permettant la lecture et/ou l'enregistrement de données,
- la figure 4 est un détail à plus grande échelle d'une partie de la figure 2,
- la figure 5 est une vue en perspective d'un détail du fond du dispositif, sans disque, montré à la figure 3,
- la figure 6 est une vue en perspective d'un détail du couvercle du dispositif montré aux figures 1, 2 et 4,
- la figure 7 représente en perspective un appareil de lecture et/ou d'enregistrement acceptant les dispositifs montrés aux figures 1 à 6,
- la figure 8 est semblable à la figure 1 mais se rapporte à une seconde variante de réalisation,
- la figure 9 est semblable à la figure 6 mais pour la variante de la figure 8,
- la figure 10 est semblable à la figure 3 mais pour la variante de la figure 8,
- la figure 11 représente un détail d'un élément des figures 8 et 10.

Pour faciliter la compréhension de l'invention, on n'a représenté sur chaque figure que les éléments nécessaires à la description de l'invention.

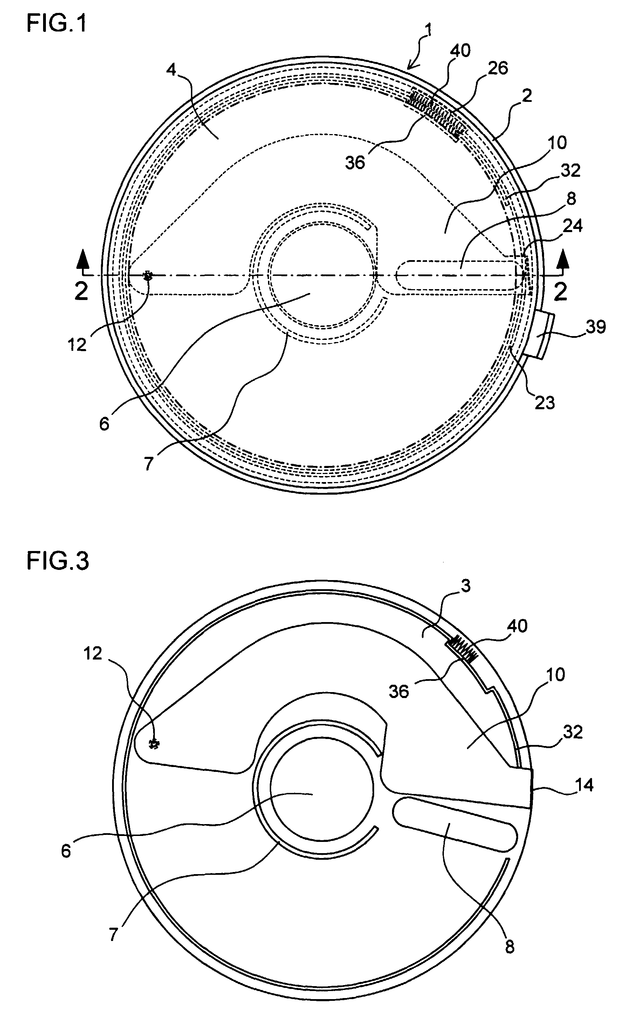

Le dispositif objet de l'invention est un boîtier 1 servant à protéger des supports 4 de données tels des disques et, comme le montrent les figures 1 à 3, l'une de ses caractéristiques est d'être de forme substantiellement circulaire ce qui autorise un gain de place appréciable (environ 20%) par rapport à tout boîtier de forme parallélépipédique. Ce boîtier est constitué de deux parties complémentaires, à savoir un couvercle 2 et un fond 3 pouvant soit s'emboîter l'un dans l'autre soit être encliquetés ou encore collés, soudés pour former une enveloppe protectrice du disque 4. Dans le mode de réalisation préféré, ces deux parties sont encliquetées et peuvent effectuer un mouvement relatif limité, ici une rotation angulaire d'environ 15°.

Le fond 3 comporte (figure 3) une ouverture centrale 6 permettant à des moyens d'entraînement de coopérer avec le disque 4 afin d'en assurer la rotation ainsi qu'une ouverture 8 oblongue associée à un volet 10 permettant à tout moyen de lecture et/ou d'enregistrement d'accéder à la surface inférieure du disque 4. Au cas où les deux surfaces du disque 4 comportent des données, ces ouvertures 6 et 8 sont également pratiquées dans le couvercle 2.

Un épaulement 7 formé dans le fond 3 et le couvercle 2 et ce dans une zone du disque ne comportant pas d'informations empêche les surfaces du disque d'entrer en contact avec le volet 10, la surface interne tant du fond 3 que du couvercle 2 et rigidifie ces deux éléments.

Si le disque 4 doit être pressé contre ses moyens d'entraînement, alors une ouverture centrale 6 est pratiquée dans le couvercle 2 du boîtier 1 pour permettre à des moyens de pression (non représentés) d'agir sur le disque 4. Pour certains types de disques comportant dans leur partie centrale un anneau perméable magnétiquement, leur clamage se faisant par flux magnétique, le couvercle 2 ne comporte pas d'ouverture centrale.

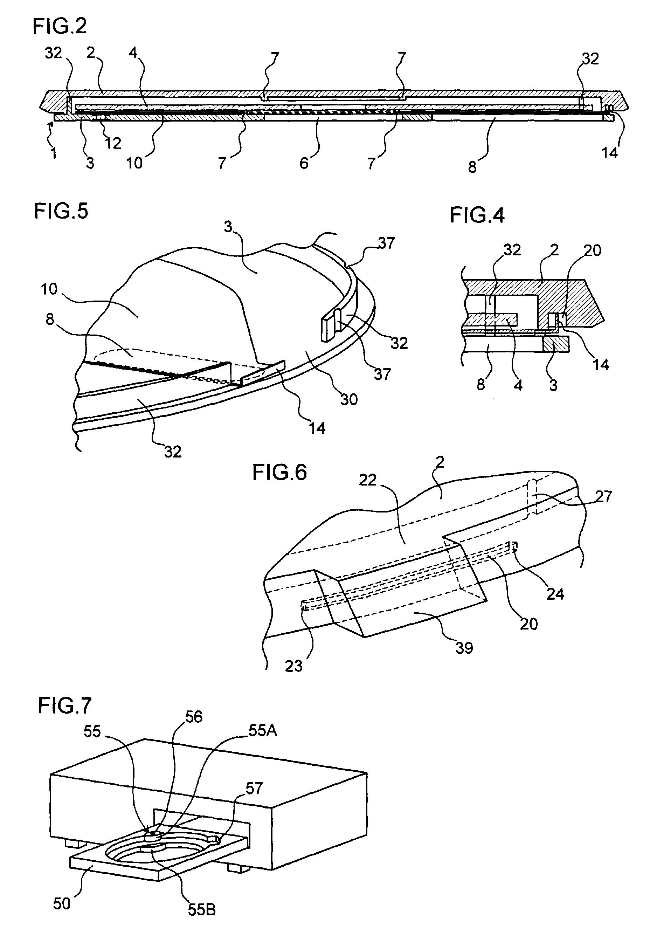

Selon une autre caractéristique du dispositif, le volet 10 est interne au boîtier 1 et effectue un mouvement de pivotement, de préférence autour ou au-delà de l'axe central du boîtier 1 et dans le mode de réalisation préféré, autour d'un axe 12, telle une douille rivée au fond 3 du boîtier à proximité de sa périphérie externe, pour assurer l'obturation de l'ouverture 8 lorsque le disque 4 et le boîtier 1 sont en position inopérative. Le volet 10 comporte à son extrémité diamétralement opposée à la douille 12 un moyen d'actionnement 14 telle une patte (figures 4, 5) coopérant avec d'une part une ouverture 30 pratiquée sur environ 15° dans la paroi circulaire verticale 32 du fond 3 du boîtier 1 et d'autre part un évidement 20 (figure 6) pratiqué également sur environ 15° dans la partie inférieure de la paroi interne 22 du couvercle 2. Les deux parois 22 et 32 sont concentriques, la paroi 32 étant située à la périphérie interne de la paroi 22; ce montage assurant et guidant la rotation relative entre le couvercle 2 et le fond 3 du boîtier 1 tout en les rigidifiant et permettant leur solidarisation par un encliquetage conventionnel mettant en oeuvre des pattes et gorges non représentées.

Le volet 10 est actionné lors du mouvement relatif entre le fond 3 et le couvercle 2, de la façon suivante:
- lorsque le fond 3 effectue une rotation dans le sens horlogique (figure 1 vue de dessus) tandis que le couvercle 2 reste immobile, le volet 10 et la patte 14 se déplacent avec le fond 3 jusqu'à ce que la patte 14 soit arrêtée par le flanc 23 situé à gauche de l'évidement 20 pratiqué dans le couvercle 2, puis le fond 3 en poursuivant sa rotation déplace simultanément l'ouverture 8 au-delà du volet 10 et la douille 12. Ainsi le volet 10, actionné par la douille 12 pivote autour de la patte 14 dans le sens opposé, ce qui découvre l'ouverture 8 et donne accès au disque 4, le mouvement étant interrompu lorsque la paroi 32 du fond 3 située à droite de l'ouverture 30 (figure 3) bute contre la patte 14 adossée au flanc 23; ainsi le volet 10 est maintenu en position d'ouverture;
- lorsque le fond 3 effectue une rotation dans le sens anti-horlogique, dans un premier temps le volet 10 et donc la patte 14 suivent ce mouvement jusqu'à ce que le flanc 24 situé à droite de l'évidement 20 pratiqué dans le couvercle 2 arrête la patte 14 puis en poursuivant son mouvement le fond 3 ramène l'ouverture 8 en dessous du volet 10 qui simultanément pivote dans le sens opposé pour l'obturer (figure 5) jusqu'à ce que la paroi 32 du fond 3 située à gauche de l'ouverture 30 rencontre la patte 14 adossée au flanc 24. Le volet 10 est ainsi immobilisé en position d'obturation.

Des échancrures 26, 36 (figures 1, 3) peuvent être pratiquées dans le couvercle 2, respectivement le fond 3 pour loger de moyens élastiques 40, tel un ressort de compression, assurant entre le couvercle 2 et le fond 3 le mouvement relatif ramenant et maintenant le dispositif dans la position stable de la figure 1 où le volet 10 obture l'ouverture 8. A la place des échancrures et du ressort, on peut prévoir un élément d'engagement 27 tel un bossage (figure 6) dans une partie flexible de la paroi 22 du couvercle 2 ou le couvercle 2 lui-même et un élément de maintien 37 telles des gorges (figure 5) dans la paroi 32 du fond 3 ou le fond 3 lui-même; ce bossage et ces gorges maintenant le couvercle 2 et le fond 3 dans les positions où l'ouverture 8 est obturée (figures 1, 5), respectivement découverte (figure 3).

Ce dispositif est donc fiable puisque le volet 10 assure toujours l'obturation de l'ouverture 8, simple car il ne met en oeuvre que deux pièces : la patte 14 et le ressort 40 ou le bossage 27 et les gorges 37 et en positionnant la douille 12 de façon diamétralement opposée à la patte 14 il ne nécessite qu'une faible amplitude de commande (environ 10°).

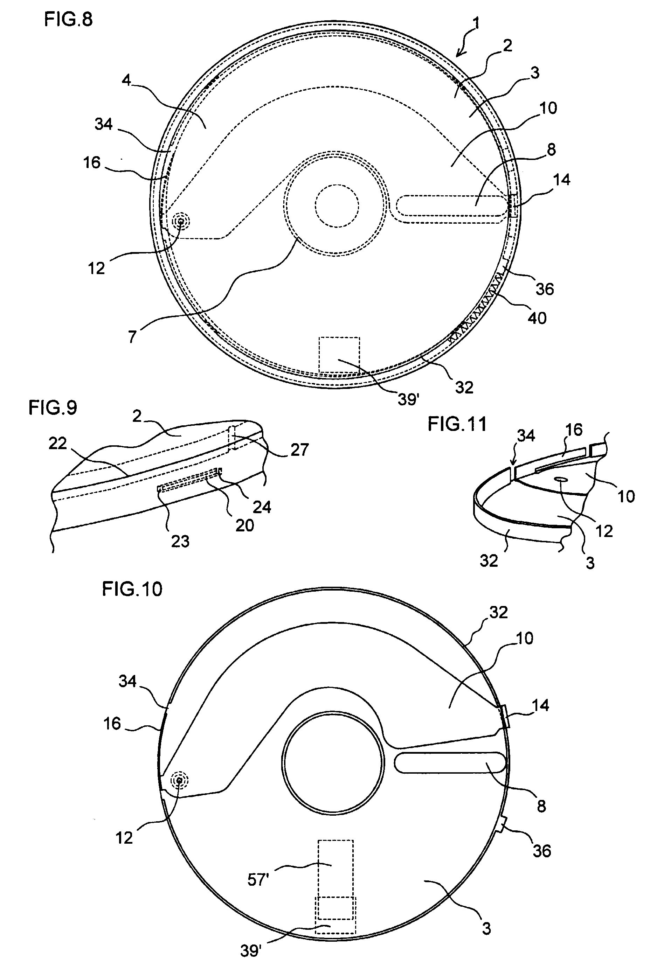

Dans la variante montrée aux figures 8 à 11, la patte 14 est toujours emprisonnée par les deux flancs 23 et 24 de l'évidement 20 qui dans ce cas a sensiblement la taille de la patte 14 (figure 9) et c'est le couvercle 2 qui tourne par rapport au fond 3. Par conséquent, le volet 10 n'effectue qu'un mouvement de pivotement autour de la douille 12. Comme le montre la figure 11, le volet 10 comporte dans cette réalisation un pli à proximité de la douille 12 procurant un moyen de blocage 16, telle une lamelle agissant sur la périphérie du disque 4 pour le bloquer en position inopérative et donc le soustraire à tout mouvement, vibration. Pour ce faire, la lamelle 16 est flexible et légèrement préarmée pour que sa face interne pousse la périphérie du disque 4, en un point sensiblement diamétralement opposé, contre la paroi 32 lorsque le boîtier 1 est en position inopérative (figure 8). Lors du pivotement du volet 10 autour de la douille 12 lorsque le boîtier 1 est amené en position opérative, la lamelle 16 est écartée de la périphérie du disque 4 et amenée dans une alvéole 34 pratiquée dans la face interne de la paroi 32 (figures 10, 11) pour l'effacer totalement; le disque 4 étant alors libre dans le boîtier 1, il peut être centré puis clamé sur ses moyens d'entraînement. Par conséquent, la lamelle 16 interdit tout mouvement au disque tant qu'il n'est pas utilisé, notamment le protège ainsi que ses surfaces lors du transport du boîtier, ce qui n'est pas le cas avec les dispositifs présents sur le marché.

Selon une autre caractéristique du dispositif, les profils périphériques externes du fond 3 et du couvercle 2 sont soit différents soit semblables mais alors placés à des niveaux différents pour procurer une nette discontinuité; notamment, dans le mode de réalisation décrit (figure 2), le profil du couvercle 2 a un diamètre supérieur à celui du fond 3. Ceci permet à l'utilisateur de facilement repérer la bonne orientation du boîtier 1, protège la patte 14 qui n'est plus accessible (figures 4, 9) et empêche donc tout actionnement du volet 10 de l'extérieur, un avantage substantiel par rapport aux boîtiers présents sur le marché. On pourrait tout aussi bien avoir un boîtier 1 dont le fond 3 est d'un diamètre supérieur à celui de son couvercle 2. De préférence les appareils de lecture et/ou d'enregistrement présentent simplement une fente d'introduction permettant l'insertion du boîtier ou un tiroir comportant un plateau 50 (figure 7) recevant un tel boîtier ayant l'empreinte de ce profil pour inciter l'utilisateur à correctement insérer le boîtier 1. Une telle discontinuité est donc robuste puisque moulée dans la masse du couvercle 2 et/ou du fond 3, elle est fiable car ne requiert le mouvement d'aucune pièce spécifique contrairement aux dispositifs existants et peut facilement être dimensionnée pour empêcher l'utilisateur de forcer l'insertion ou le placement d'un boîtier 1 mal orienté.

Dans les variantes de réalisation décrites, on utilise le profil externe (figure 2) du fond 3 et du couvercle 2 pour assurer leur mouvement de rotation relatif. En effet, en munissant l'appareil d'enregistrement et/ou de lecture d'une roulette 55 (figure 6) - comportant deux surfaces 55A, 55B coaxiales pour la première variante, respectivement une surface 55A pour la seconde variante - coopérant avec le couvercle 2, respectivement le fond 3 et le boîtier 1 d'une discontinuité 39, par exemple une protubérance à la périphérie du couvercle 2 (première variante - figures 1, 5), ou une dépression dans la face inférieure du fond 3 (deuxième variante - figures 8, 10); la roulette 55 entraînée autour de son axe 56 par un moteur non représenté assurera la rotation du boîtier 1 jusqu'à ce que la discontinuité 39 soit stoppée par un moyen d'arrêt 57 (figure 6) telle une échancrure pour la première variante (figure 7) ou une patte flexible montée sur le fond du plateau avec lequel elle coopère pour la seconde variante (figure 10). Le mouvement du couvercle 2, respectivement du fond 3 étant bloqué, la surface 55A ou 55B de la roulette assure la rotation du seul fond 3 ou du seul couvercle 2 et donc leur mouvement relatif, comme décrit précédemment, découvre l'ouverture 8. Le moteur entraînant la roulette 55 est ensuite coupé, par exemple après l'écoulement d'un laps de temps prédéterminé et la surface 55B, respectivement 55A de la roulette maintient le fond 3, respectivement le couvercle 2 dans leur position relative.
- 1: boîtier
- 2: couvercle
- 3: fond
- 4: disque
- 6: ouverture centrale
- 7: épaulement
- 8: ouverture
- 10: volet
- 12: axe, douille
- 14: patte
- 16: moyen de blocage; lamelle
- 20: évidement
- 22: paroi interne
- 23: flanc
- 24: flanc
- 26: échancrure
- 27: bossage
- 30: ouverture
- 32: paroi verticale circulaire
- 34: alvéole
- 36: échancrure
- 37: gorge
- 39: discontinuité
- 40: ressort
- 50: plateau
- 55: roulette
- 55A: surface de 55
- 55B: surface de 55
- 56: axe de 55
- 57: moyen d'arrêt

## Revendications

1. Dispositif de protection (1) pour support (4) en forme de disque comportant deux parties, un couvercle (2) et un fond (3), l'une d'entres elles au moins étant munie d'une ouverture (8) permettant aux moyens de lecture et/ou d'enregistrement d'accéder au support (4) et associée à un volet (10) mobile pour obturer, découvrir ladite ouverture (8), caractérisé en ce que le couvercle (2) et le fond (3) sont complémentaires et de forme substantiellement circulaire et effectuent un mouvement relatif limité.

2. Dispositif selon la revendication 1, caractérisé en ce que le volet (10) est interne au dispositif (1) et pivote autour ou au-delà de l'axe central dudit dispositif (1).

3. Dispositif selon la revendication 1 ou 2, caractérisé en ce que le volet (10) comprend un moyen d'actionnement (14) coopérant avec le couvercle (2) et/ou le fond (3).

4. Dispositif selon la revendication 3, caractérise en ce que le volet (10) pivote autour d'un axe (12) diamétralement opposé à son moyen d'actionnement (14).

5. Dispositif selon la revendication 3, caractérisé en ce que le fond (3) comporte une ouverture (30) et le couvercle (2) un évidement (20) coopérant avec le moyen d'actionnement (14) pour déplacer et/ou bloquer le volet (10).

6. Dispositif selon l'une quelconque des revendications 3 à 5, caractérisé en ce que le couvercle (2) recouvre le moyen d'actionnement (14) pour interdire l'actionnement du volet (10) de l'extérieur.

7. Dispositif selon la revendication 5, caractérisé en ce que le volet (10) est verrouillé en position d'ouverture, respectivement de fermeture par le moyen d'actionnement (14) bloqué entre les flancs (23, 24) et la paroi (32) dont est muni le fond (3).

8. Dispositif selon la revendication 1, caractérisé en ce que le couvercle (2) comprend un élément d'engagement (27) et le fond (3) un élément de maintien (37) pour maintenir lesdits couvercle (2) et fond (3) dans des positions où le volet (10) obture, respectivement découvre l'ouverture (8).

9. Dispositif selon la revendication 1, caractérisé en ce que le couvercle (2) et le fond (3) comportent des moyens élastiques (40) assurant leur mouvement relatif limité et maintenant le volet (10) en position d'obturation de l'ouverture (8).

10. Dispositif selon la revendication 1, caractérisé en ce que les profils du couvercle (2) et du fond (3) du dispositif (1) sont différents pour indiquer son orientation correcte pour introduction dans un appareil de lecture et/ou d'enregistrement.

11. Dispositif selon la revendication 10, caractérisé en ce que le profil du couvercle (2) est d'un diamètre supérieur à celui du fond (3).

12. Dispositif selon la revendication 10, caractérisé en ce que le profil du couvercle (2) ou du fond (3) comporte une discontinuité (39).

13. Dispositif selon la revendication 1, caractérisé en ce qu'il comprend un moyen de blocage (16) coopérant avec la périphérie du disque pour le soustraire à tout mouvement en position inopérative.

14. Dispositif selon la revendication 13, caractérisé en ce que le moyen de blocage (16) est flexible.

15. Dispositif selon la revendication 13 ou 14, caractérisé en ce que le moyen de blocage (16) est actionné par le volet (10).

16. Dispositif selon la revendication 1, caractérisé en ce que le le fond (3) porte une discontinuité (39) limitant son mouvement.

17. Appareil pour lecture et/ou enregistrement de disques (4), caractérisé en ce qu'il utilise un dispositif de protection selon l'une quelconque des revendications précédentes.

18. Appareil selon la revendication 17, caractérisé en ce qu'il comporte des moyens (55, 55A, 55B) coopérant avec le couvercle (2) et/ou le fond (3) du dispositif de protection pour leur assurer un mouvement angulaire relatif limité.

19. Appareil selon la revendication 17 ou 18, caractérisé en ce qu'il comporte un moyen d'arrêt (57) coopérant avec la discontinuité (39) portée par le couvercle (2) ou le fond (3) du dispositif de protection pour limiter son mouvement.
